**Europäisches Patentamt**

**European Patent Office**

**Office européen des brevets**

(19)

(11) Publication number: **0 386 578 B1**

# EUROPEAN PATENT SPECIFICATION

(12)

(45) Date of publication of patent specification: **30.11.94**   (51) Int. Cl.⁵: **A01G 9/00**

(21) Application number: **90103698.8**

(22) Date of filing: **26.02.90**

(54) **Closed ecological system.**

(30) Priority: **08.03.89 US 320641**
      **02.11.89 US 430828**

(43) Date of publication of application:
      **12.09.90 Bulletin  90/37**

(45) Publication of the grant of the patent:
      **30.11.94 Bulletin  94/48**

(84) Designated Contracting States:
      **AT BE CH DE DK ES FR GB GR IT LI LU NL SE**

(56) References cited:
      **EP-A- 0 196 108**
      **FR-A- 1 287 352**
      **FR-A- 2 562 765**

      **Machine Design vol 59,no.20, 10 sept.1987 , Cleveland,Ohio,USA page 38,39,42,43;Thomas A. Nobbe: "Habitat to test unearthly living"**

      **Technische Rundschau vol. 81, no. 21, 26 May 1989, Bern,CH pages 44 - 53;Magret Sutter: "Biosphäre II,eine neue Erde von Menschenhand"**

(73) Proprietor: **Decisions Investments Corp.**
      **Biosphere 2 Center**
      **Highway 77, 96.5 Mile Marker**
      **Post Office Box 689**
      **Oracle, Arizona 85623 (US)**

(72) Inventor: **Augustine, Margret, SunSpace Ranch**
      **Highway 77,**
      **Milepost 96.5,**
      **P.O. Box 689**
      **Oracle, Arizona 85263 (US)**
      Inventor: **Leigh, Linda S., SunSpace Ranch**
      **Highway 77,**
      **Milepost 96.5,**
      **P.O. Box 689**
      **Oracle, Arizona 85263 (US)**
      Inventor: **Dempster, William F., SunSpace Ranch**
      **Highway 77,**
      **Milepost 96.5,**
      **P.O. Box 689**
      **Oracle, Arizona 85263 (US)**
      Inventor: **Hodges, Carl N.**
      **4230 E Whittier**
      **Tuscon, Arizona 85711 (US)**

Inventor: **Hawes, Philip B., SunSpace Ranch Highway 77,
Milepost 96.5,
P.O. Box 689
Oracle, Arizona 85263 (US)**

(74) Representative: **Patentanwälte Grünecker,
Kinkeldey, Stockmair & Partner
Maximilianstrasse 58
D-80538 München (DE)**

## Description

### Field of the Invention

This invention relates to a closed ecological system, including humans, which is completely isolated from the earth's environment insofar as transfer of matter is concerned. The system is open for transfer of energy and information. The closed ecological system is operated to provide balanced nutrition for the human occupants and a stable environment with closed carbon, oxygen, nitrogen, water, etc., cycles.

### Background

The earth itself comprises a biosphere in which microorganisms, plants, and animals, including humans, exist in a more or less steady state, wherein matter is a finite resource which is continually recycled. There is continual energy input in the form of solar radiation. The quantity of matter gained or lost to space outside the earth's atmosphere is minute. Thus, the earth is a closed ecological system which may be referred to herein as Biosphere I. Although the earth recycles matter continually between the soil, oceans, atmosphere, biomass, and the like, in a nearly steady state, there appears to be a drift of conditions as indicated by increasing carbon dioxide concentration in the atmosphere, the well-known "ozone hole," and other effects which may not have been detected as yet.

It is desirable to provide a microcosm of the biosphere known as earth for study of the interaction of components, and development of techniques for influencing our environment. Such experiments are difficult at best in the open system provided on earth, where matter is exchanged between the earth's environment and the experiment itself. It is, therefore, desirable to provide a system that is completely enclosed so that no matter is exchanged with the earth's environment. It is desirable to have humans within this miniaturized biosphere to provide control, and conduct scientific research within a closed system where conditions may be varied as desired.

Being a closed system having humans within the system requires that they be provided with a balanced diet for long-term health and that closed cycles be established for carbon, oxygen, nitrogen, other nutrients, water, and the like, so that the closed system may remain in a more or less steady state for the long periods of time required for conducting meaningful scientific research.

There is, therefore, being established near Oracle, Arizona, a completely closed ecological system referred to as Biosphere II and briefly described in Machine Design, 59, pp. 38-43, 1987. The system completely encloses about one hectare of land and 175,000 cubic meters of space isolated from the earth's environment by an impermeable skin so that no matter is transferred. The above ground portion of the skin is largely transparent for receiving solar radiation. Electrical energy is provided to the closed system, and heat may be transferred to or from the system as required. Thus, the Biosphere II closed ecological system is closed as to matter, but open as to energy. For meaningful research, it also remains open for transfer of information.

The Biosphere II system provides facilities for occupation by eight humans who can remain sealed in the system under healthful living conditions for two years or more. Diverse plant, animal and microorganism populations in the system assure balancing of the ecology for long periods.

In Biosphere I, namely the earth, the interactions of and immense diversity of life species and chemical and physical reactions are such that a relatively steady state prevails without human intervention (if anything, humans tend to disrupt the steady state). In a smaller closed ecological system, however, it is improbable that a habitable environment would prevail for very long without human intervention. Thus, it is desirable to provide means for controlling the cycles of matter in a closed ecological system for fulfilling a number of desired functions.

The closed system should maintain an atmosphere with a composition suitable as a habitat for humans and other animals, as well as a variety of plant species on which such animals, including humans, must rely for edible biomass. Water quality and supply must be maintained for healthy life of plants, humans and other animals. The steady state in such a closed ecological system may change over relatively short periods of time, and it is desirable to provide means for controlling the steady state "naturally," that is, by manipulation of living organisms rather than purely chemical intervention, which may immobilize some of the matter, rather than leaving it in a circulation that continually recycles matter for sustaining life in the closed system.

For example, it is important to maintain the carbon dioxide concentration in the atmosphere within the closed ecological system within limits that are tolerable by the human and other animal occupants of the system, and provide for a desired steady state growth of plants for providing edible biomass and recyclable carbonaceous materials. Maintaining a suitable carbon cycle requires human intervention.

As another example, the genetic diversity of plants grown in the environment may deteriorate due to inbreeding. Human intervention for maintaining genetic diversity in a rather small, closed ecological system may be required, since there is no space for continual growing of many different cultivars for diversity. Because of the small amount of matter and space in the closed ecological system, various phenomena required for maintaining a steady state must be controlled in an intensive manner. Otherwise, the system may become grossly out of balance in a short time interval.

**Brief Summary of the Invention**

There is, therefore, provided as one example of practice of this invention, a method for balancing a closed ecological system which is isolated from the earth's environment. A layer of soil is used for growing a diversity of plant species. Air from the atmosphere is circulated through the layer of soil at a sufficient rate for maintaining aerobic growth conditions for microorganisms in substantially all of the layer of soil. This serves to remove toxic and other oxidizable substances from the air by adsorption on soil particles and metabolizing by microorganisms in the soil.

Carbon dioxide concentration in the atmosphere within the closed system may be controlled by varying the growth rate of plants which fix carbon. A simple way for controlling growth rate is by controlling water available to rapid growth plants such as C4 grasses.

**Brief Description of the Drawings**

These and other features and advantages of the present invention will be appreciated as the same becomes better understood by reference to the following detailed description when considered in connection with the accompanying drawings wherein:

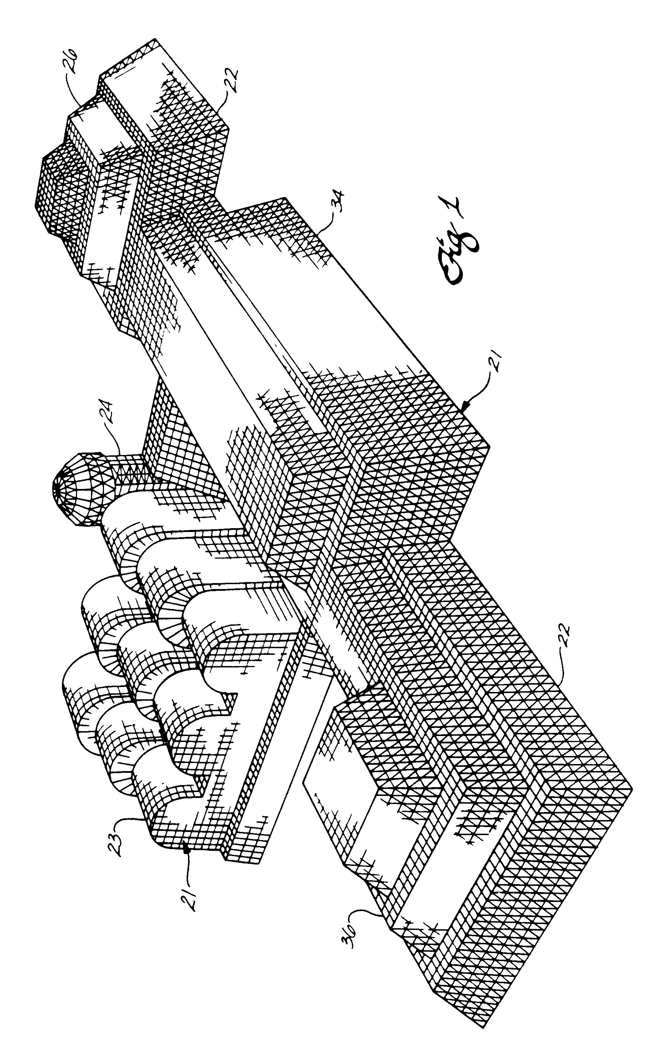

FIG. 1 is a perspective view of Biosphere II, a completely enclosed ecological system operated in accordance with practice of this invention;

FIG. 2 is a schematic longitudinal cross-section through a portion of the closed ecological system;

FIG. 3 is a partial floor plan of the first floor of a habitat for humans and other animals within the closed ecological system;

FIG. 4 is a semi-schematic plan view of an intensive agricultural area adjacent to the habitat within the closed system;

FIG. 5 is a schematic block diagram illustrating an exemplary closed cycle of matter within the closed ecological system; and

FIG. 6 is a schematic plan view of a wilderness area in the closed ecological system.

**Detailed Description**

The basic structure of the closed ecological system comprises a concrete foundation on a gentle hillside with a glazed tubular steel space frame 21 erected on the concrete foundation. The foundation includes a welded and leak-tested stainless steel sheath or pan embedded in the concrete to prevent transfer of air, water or other matter through the foundation. The major part of the above-ground structure is covered with glass walls wherein all of the joints are tightly sealed. The glass is also sealed to the stainless steel pan in the foundation so that no air or other matter is transferred between the interior of the closed ecological system and the earth's environment.

The system is constructed to operate at a pressure of about 1500 dynes per square centimeter (or about 1 mm of mercury) greater than ambient atmospheric pressure. A large pressure-compensating "lung" or accumulator (not shown) compensates for ambient pressure changes, temperature changes, and the like.

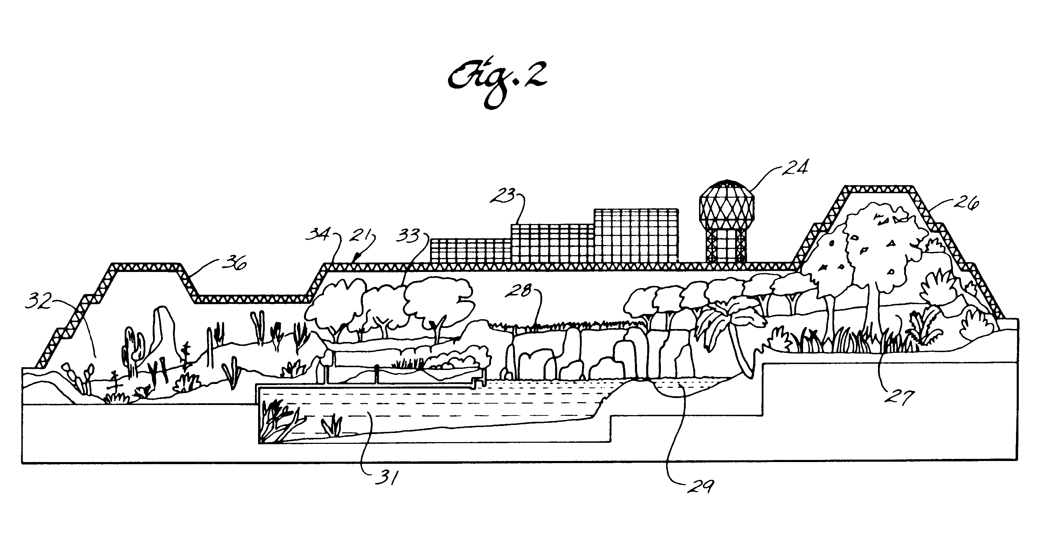

There are three principal portions to the closed system. There is an elongated wilderness module structure 22 covering about 0.6 hectare which is also illustrated in longitudinal cross-section in FIG. 2. To one side of the wilderness module structure is an intensive agricultural module 23, which is normally open to the wilderness module, but which may be isolated in an emergency. On one side of the intensive agricultural module is a living habitat 24 where the human and other animal occupants of the closed ecological system are housed. The humans, of course, may traverse the entire system for agriculture, control, maintenance, and the like.

Not illustrated herein, since not required for an understanding of this invention, are details of the living quarters for the humans, a variety of laboratories and workrooms, plus a substantial complex of subterranean pumps, fans, heat exchangers, condensers, storerooms, and the like. Condenser coils (not shown) induce condensation of water from the atmosphere, which may be used for watering plants in various parts of the wilderness biome for controlling growth of plants in various ecological habitats therein. Condensation may also occur on the inside of the skin of the closed system and water some areas in the wilderness biome.

The wilderness biome forming the largest part of the closed ecological system has a tall, roughly pyramidal space frame structure 26 at its uphill end. Within this pyramid, which is approximately 26 meters high and 1900 square meters in floor area, there is a tropical rain forest 27 containing plants, insects and small animals characteristic of those that grow well in tropical rain forests in Biosphere I. Excess water flows from the tropical rain forest biome to creeks through a tropical savannah biome 28 at the top of rock cliffs. Water flows from there to fresh-water and salt-water marshes and lagoons 29 and eventually into a salt-water ocean 31. The transition section between the tropical savannah and a desert biome 32 at the lowest elevation of the wilderness biome has a thorn-scrub forest 33.

The savannah and thorn-scrub forest are housed in a more or less flat-topped glazed space frame module 34 with a generally trapezoidal cross-section. The desert biome is in a generally pyramidal space frame module 36 at the lowest elevation end of the wilderness biome. The humidity in the wilderness biome is higher than many desert regions, so the plants selected for growth in the desert biome are those typically found in coastal fog deserts where there is low rainfall but high humidity.

A diversity of plant and animal species are provided in the wilderness module so that a large biomass can remain throughout a prolonged closed cycle. This provides substantial buffering of the carbon, oxygen, nitrogen, water, etc. cycles in the closed system. Included are about 4,000 species of plants, ranging from tiny varieties to trees which can be accommodated within the available height of the space frame. Some 250 species of insects and about 250 species of vertebrates are included.

Such diversity is not only useful for maintaining a balanced ecology and resistance to pests, but also compensates for occasional species extinctions which may be expected in such a system. Some of the species may also provide edible food for the humans and the domesticated animals in the system. For example, a few coffee trees are included for a small harvest of beans.

Criteria for inclusion of plant species in the wilderness biome and in the intensive agricultural area hereinafter described, include more than maximizing the diversity of species. The edible species must collectively support human life, providing a nutritionally complete diet for humans and their domesticated animals. The plant reproductive processes of the agricultural crops, and preferably of other plants, must be through open pollination. All of the living organisms selected for the closed ecological system must be appropriate for the environmental parameters, e.g., atmospheric composition, humidity, temperature ranges, etc., expected during the useful life of the closed system.

Preferably, the total number of phyla represented is maximized and all five kingdoms of life are represented. Species are selected for rapid evolutionary adaptability to accommodate to the environmental parameters in the system. Species are also selected for completing the essential food cycles or providing essential ecological functions. The diversity also maximizes the redundancy of the system so that long-term stability may be maintained.

In addition to plants in the system, a variety of animal species are also included, both vertebrate and invertebrate. Various insects such as bees, moths or butterflies, hummingbirds, fruit bats and the like, are included for pollination. Other bird species are included for dispersal of seeds and closing the food cycle, while at the same time providing pleasure for the human occupants. A broad variety of insects, worms and the like, are included, such as several species of termites which decompose savannah grasses and other cellulosic materials within the system. Scavengers such as cockroaches and mites, and what might be considered to be pests, such as mosquitoes, are also included. Dragonflies which help control mosquito populations and also convert debris to valuable nutrients in the soil and water are also useful species to include.

Ladybird beetles are highly desirable for control of aphids and similar pests which may infest agricultural crops. Other predator or parasitic insects may also be included since pest control is entirely by biological means, washing of plants or the like. No pesticidal or herbicidal chemicals or chemical fertilizers are introduced into the closed ecological system, except such fertilizers as may be needed for assuring fertile starting conditions in the indigenous soil used in the soil layer, and possibly a nematocide such as Clandosan for control of these particularly difficult pests.

Potential pest problems are handled through a variety of biological and cultural techniques. Beneficial insects which prey on pests are reared and released into the affected crops as necessary. Crops are planted together (either intercropping or companion planting) to prevent pests from congregating on a pure stand of a single susceptible crop. Genetic diversity also promotes the possibility of resistant strains occurring in the plant population. Crops that are susceptible to a particular pest or pathogen are rotated with non-susceptible crops.

A variety of crops are grown together in a small area to create diverse ecosystems within the plant canopy and the soil rhizosphere to discourage pest build-up over time. Mechanical techniques such as water washing of plant materials, and physical clean-up of pests and pest contaminated areas may also be used as required. Possibly most significant is continual monitoring to detect pest problems early so that prompt intervention minimizes the problem with appropriate countermeasures.

A small portion of coral reef is included in the "ocean" for its role in the carbon cycle and to provide a suitable habitat for some of the plant and animal species. About 250 species of fish are also included. The fish excrete ammonia into the water in their wastes. Naturally occurring microorganisms convert the ammonia to nitrates, which are then available nutrients for algae in the fish water and for plant crops irrigated with the fish water.

An important species of fish grown in the habitat portion of the system is tilapia, which eat algae and plant wastes and provide nutrient-enriched water which may be recycled to agricultural areas. Further, the tilapia reproduce prolifically and augment the diet for the human occupants of the closed ecological system.

Some species, which might otherwise be candidate for inclusion in the closed ecological system, may be excluded for a variety of reasons, such as inability to reproduce in the environmental conditions prevailing within the system. One would exclude species whose limits of tolerance of environmental parameters are outside of the conditions prevailing in the system. Other species may be excluded since they cannot be supported by the limited food cycle in the system or have size constraints because of the volume available for growth. One should also exclude species that are toxic to essential species within the system.

One should also consider in deciding whether to include or exclude species within the closed system, whether a given organism contributes to the diet palatability of the human occupants or to potential pharmacopeia needs. It, of course, is desirable to select species that contribute to the aesthetics of the system when other criteria are met.

The species included in the system include a broad variety of microorganisms, fungi, and the like, which may inhabit the soils and other species of organisms that are present in the closed system. Both aerobic and anaerobic organisms are present and contribute to the overall ecological balance of the closed system.

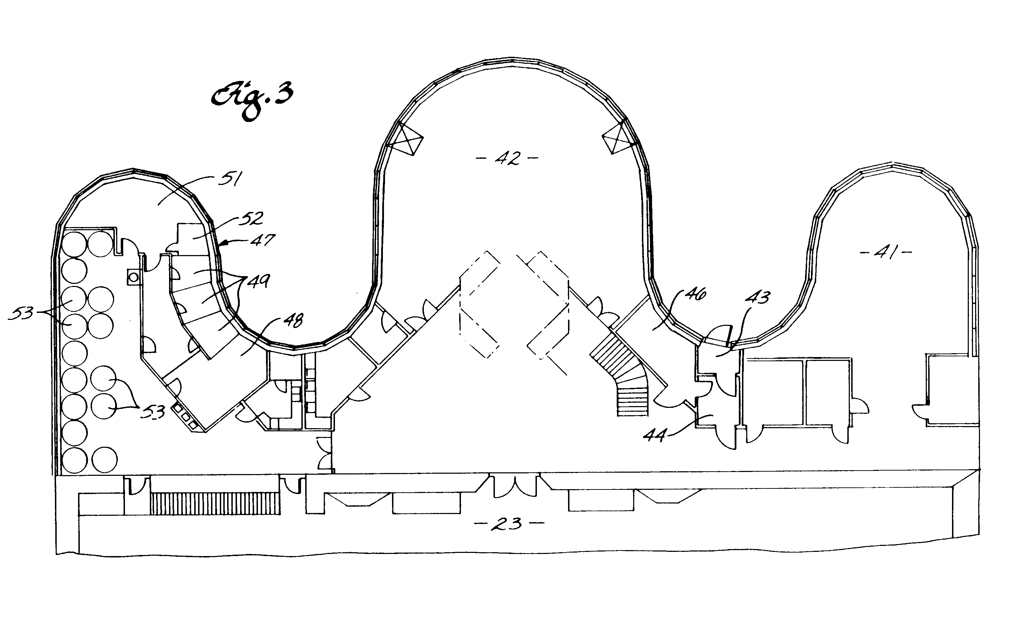

One level of the habitat module of the closed ecological system is illustrated in FIG. 3. More or less conventional facilities and residential quarters for the human occupants of the system are provided on a floor above the one illustrated. As in the balance of the structure, the basic framework of the living module is a glazed steel space frame which provides ample viewing of the external world as well as observation of the activities within the system.

On the level illustrated, for example, there is a workshop area 41 in one alcove and a large recreation and exercise area 42 in another alcove. Rest rooms, showers, laundry rooms, storage areas, and the like, are also included. A sealed anteroom 43 has a door leading to the external environment outside Biosphere II. An air-lock room 44 is provided between the anteroom and the interior of the closed system to provide access for medical emergencies or the like, or for introduction of other materials into the system to achieve desired experimental conditions. Adjacent to the air lock is a room for storing sealed garments analogous to space-suits which might be used by temporary visitors to the closed system for performing specialized maintenance tasks, assisting in medical emergencies, or the like.

Of particular interest for maintaining a steady state closed ecological system with balanced nutrition for the human occupants is an area for domesticated animals in the third alcove 47. Within this room, there is a pen 48 for about a small flock of chickens. The chickens provide eggs as part of the diet for the human occupants and, on occasion, they provide meat. Three pens 49 are included for pygmy pigs which are efficient omnivores and may provide meat for the occupants of the habitat. A goat pen 51 provides living space for a few goats to provide milk and possibly meat for the human occupants of the habitats. A separate milking room 52 is also included.

Nearby are a number of fish tanks 53 in which intense growth of tilapia or other edible fish may be maintained. With careful control of the food and waste products from fish, high-density aquaculture may produce large amounts of valuable protein in a small amount of space. In addition, fish may be harvested from bodies of water in the wilderness biome. Such places for growth of animals for supplementing the human diet are optional and subject to appreciable variation depending on the desired diet.

Adjacent to the habitat area is the intensive agriculture module 23. The floor of the intensive agriculture module is closed, with drains for capturing excess water which may be applied to the growing crops. This closed floor is overlain by a permeable layer surmounted by a 2000 square meter layer of soil having a thickness in the range of from about 0.5 to 1.5 meters, preferably about one meter. It is desirable that the layer of soil be well composted with organic materials before the ecological system is closed, so that the starting conditions are similar to those present during steady state operation of the closed system. Soil fertility is maintained during operation of the closed ecological system by returning all crop residue and all human and animal waste products back to the soil, directly or indirectly.

The layer of soil is also inoculated with many species of microorganisms, some of which may have been indigenous to the original soil, and others of which may be added for assuring that the material cycles in the closed ecological system remain in balance. The layer of soil also provides the substrate on which intensive agriculture is conducted for providing edible biomass for the human and other animal occupants of the closed system. It therefore is also started with chemical amendments such as rock phosphate, phosphorus, iron, sulfur, and nitrogen salts as required to be complete for plant growth. Thereafter soil management assures that the soil will sustain agriculture indefinitely.

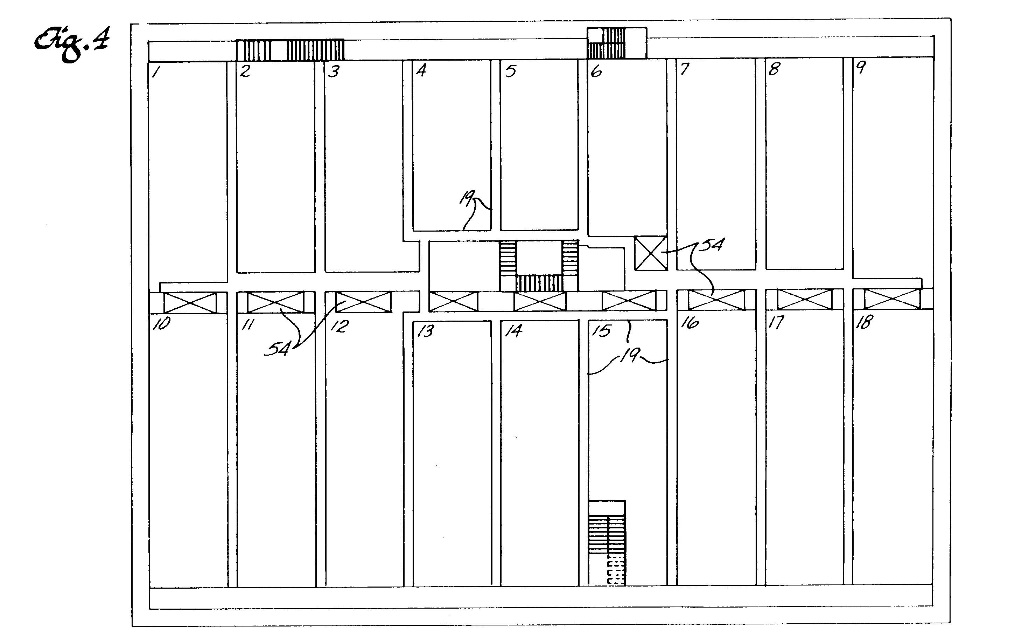

In an exemplary embodiment, the agricultural area is divided into several plots, 1 through 18, which are separated from each other by narrow paths 19 that the occupants may use for access to the crop areas (FIG. 4). Each of the individual crop areas is planted with a variety of plant species which may be used in the diet of the human and other animal occupants of the closed system.

The plots are not only planted with a diversity of species, but the plantings and harvestings are out of phase with each other, so that one plot may have young plants while an adjacent plot has mature plants, still another plot has plants in an intermediate stage of growth, and a fourth plot may, at that moment, be undergoing cultivation for introduction of another crop. Further, to prevent depletion of essential nutrients from the soil, a strict regimen of crop rotation is employed so that successive crops on a given plot continually change. Intercropping may also be employed for intensive agriculture and for synergistic cooperation between plant species.

The crops grown on these relatively larger plots 1 to 18 include starchy vegetables, grains, forage crops for domesticated animals, oil seeds, legumes of both high-fat and low-fat varieties, and miscellaneous fruits and vegetables, and may include high biomass green manure crops which are composted or promptly cultivated back into the soil. An exemplary crop rotation in the intensive agriculture biome is set forth in Table I, which covers a one-year period. It will be apparent that in the normal course of rotation subsequent crops in each plot may differ from any of the preceding ones; thus, for example, the final wheat shown in plot 10 might be followed with intercropping of sorghum and sunflowers, or maybe peanuts, as may be desired for maintaining essential nutrients in the selected plot.

## TABLE I
## Plot History of Crops

1.  Sweet potato 6/21-10/21 --> Dry Bean 10/22-
    1/4 --> Barley 1/5-5/5

2.  Sorghum 6/21-11/8 --> Alfalfa 11/9-1/6 -->
    Wheat 1/7-5/6

3.  Alfalfa 6/21-12/21 --> Barley 12/22-4/21 -->
    Cow Pea 4/22-7/21

4.  Sunflower (seed) 6/21-10/3 --> Dry Bean 10/4-
    1/4 --> Alfalfa 1/5-4/2 --> Soybean 4/3-8/2

5.  Alfalfa 6/21-10/20 --> Wheat 10/21-2/21 -->
    Sunflower 2/22-6/10

6.  Sunflower (oil) 6/21-10/3 --> Dry Bean 10/4-
    1/4 --> Wheat 1/5-5/4

7.  Peanut (oil) 6/21-10/21 --> Alfalfa 10/22-12-
    21 --> Barley 12/22-4/21 --> Soybean 4/22-
    8/21

8.  Sorghum 6/21-11/8 --> Dry Bean 11/9-2/8 -->
    Alfalfa 2/9-4/8 --> Sunflower (seed) 4/9-7/30

9.  Sweet Potato 6/21-10/21 --> Alfalfa 10/22-
    12/21 --> Wheat 12/22-4/21 --> Alfalfa 4/22-
    5/22

10. Cow Pea 6/21-9/21 --> Dry Bean 9/22-12-21 -->
    Wheat 12/22-4/21 --> Alfalfa 4/22-8/21

11. Peanut (seed) 6/21-10/21 --> Alfalfa 10/22-
    12/21 --> Barley 12/22-4/21 --> Dry Bean 4/22-
    7/22

12. Sweet Potato 6/21-10/21 --> Dry Bean 10/22-
    1/22 --> Sunflower (oil) 1/23-5/12 --> Alfalfa
    5/13-7/12

13. Sorghum 6/21-11/8 --> Alfalfa 11/8-1/3 -->
    Barley 1/4-5/3 --> Peanut 5/4-9/3

14. Peanut (oil) 6/21-10/21 --> Winter Squash
    10/22-2/22 --> Alfalfa 2/23-4/21 -->
    Cow Pea 4/22-7/21

15. Alfalfa 6/21-10/20 --> Wheat 10/21-2/21 -->
    Alfalfa 2/22-4/20 --> Sorghum 4/21-9/11

EP 0 386 578 B1

```
15a.  Pumpkin 6/21-10/5 --> Dry Bean 10/6-1/4 -->
      Alfalfa 1/5-4/20 --> Sorghum 4/21-9/11

16.   Cow Pea 6/21-9/21 --> Dry Bean 10/4-1/4 -->
      Wheat 1/5-5/5 --> Peanut (oil) 5/6-9/5

17.   Peanut (seed) 6/21-10/21 --> Alfalfa 10/22-
      11/15 --> Barley 11/16-3/15 --> Alfalfa 3/16-
      4/16 --> Cow Pea 4/17-7/16

18.   Cow Pea 6/21-9/21 --> Alfalfa 9/22-10/22 -->
      Dry Bean 10/22-1/21 --> Alfalfa 1/22-3/31 -->
      Sorghum 4/1-8/21
```

In addition to the larger plots, smaller areas 54 indicated with diagonal crossing lines in FIG. 4 may be used for intensive growth of a variety of vegetables which, collectively with the other crops and supplemented by animal products from the domesticated animals and fish, provide a balanced diet for the human occupants. Vegetables may also be grown in an upper level of the habitat module. About 140 food crops may be employed. Portions of the vegetable crops, as well as those mentioned above, also provide balanced nutrition for the domesticated animals. Many of the plants can be grown year-round, while others may require some other abbreviated growing season depending on the solar cycle, temperatures expected, etc. A diversity of species is employed to provide palatability for the diet as well as balanced nutrition. For example, herbs and spices are included.

Exemplary of the crops that are employed in the intensive agriculture biome are grains, such as barley, amaranth, oats, rice, sorghum and wheat. Starchy vegetables are included, such as potatoes, sweet potatoes, pumpkins, winter squash, and the like. Legumes and seed crops may include high oil varieties such as peanuts, safflower, soybeans or sunflowers, which may be used directly as food or processed for oil. Low-fat legumes, which, like other of the aforementioned plants, may be stored for later use, include cow peas, beans which may be dried, pigeon peas, and the like.

An important element of nutrition for human occupants of the closed ecological system comprises dark green leafy vegetables such as collards, kale, mustard greens, parsley, spinach, Swiss chard, turnip greens, beet greens, and the like. Other vegetables which may conveniently be grown by intensive agricultural techniques, including intercropping both with vegetables and with other crops, include bush and pole beans, beets, broccoli, brussels sprouts, Chinese cabbage, cabbage, carrots, cucumbers, lettuce, onions, edible pod peas, bell peppers, chili peppers, radishes, cantaloupes and other melons, squash, cherry tomatoes, and the like. Fruits may be included in the diet, such as strawberries, grapes, kumquats, oranges, or other citrus, some of which may be grown in the wilderness biome. Edible mushrooms may also be grown in inedible biomass and soils.

Such a mix of grains, oil seeds, legumes, vegetables, milk, eggs and meat clearly provide a balanced nutrition for the human occupants of the closed system. Intensive agriculture provides an opportunity to have a steady diet of fresh vegetables as well as edible biomass from other crops, which may be stored by freezing, drying, canning or refrigeration. Edible biomass in excess of the nutritional requirements for the human occupants as well as parts considered inedible by the human occupants may be employed as feed for the domesticated animals.

Crop residues and inedible portions of the crops are composted along with animal wastes and cultivated back into the layer of soil, thereby helping maintain a ratio of nitrogen to carbon in the soil in the range of from about 1:10 to 1:30. Some of the wastes and plant residues may be cultivated directly back into the soil without composting. It is desirable, however, to compost or sterilize human wastes so that pathogenic organisms, if any, are destroyed before recycling to the crop areas. Excess water, which may be rich in nutrients, recovered from drains in the floor of the intensive agricultural area, is recycled to the crops in the layer of soil for exposure to the roots.

Air may be introduced through the porous floor beneath the layer of soil in the agricultural area and flow upwardly, or may be withdrawn through the porous floor and flow downwardly through the layer of soil, which thereby forms a soil bed reactor. Air is circulated at a sufficient rate for maintaining aerobic growth conditions for microorganisms in substantially all the layer of soil. Some pockets of anaerobic conditions may occur from time to time.

Such aeration is beneficial for stimulating growth of the food crops on the layer of soil. In addition, the soil bed reactor has the benefit of oxidizing organic and some inorganic noxious, malodorous and toxic gases that may occur in the atmosphere due to evolution from waste products and anaerobic digestion, such as in termites and the like.

A portion of the carbon balance of the closed system is maintained by reintroducing inedible biomass from the plants, animal wastes, human wastes, and excess edible biomass to the layer of soil. Microorganisms in the soil metabolize the carbonaceous materials producing carbohydrates, proteins, and carbon dioxide. Maintenance of the carbon-nitrogen balance in the soil is desirable for maintaining healthy microorganism populations as well as good growth conditions for the plants.

A problem that may be encountered in a closed ecological system involving several generations of plants is the inbreeding that may occur because of lack of diversity in the gene pool within the system. For this reason, it is desirable to introduce at least three populations or cultivars of plants within each species, particularly those species that reproduce several times during the course of use of the closed system. Since the closed system has a relative small space, introduction of a substantial pool of gene diversity in the form of plants, seeds, tubers, propagules, or the like, may not be feasible. Further, it may not be feasible to preserve species in a manner that permits cross-breeding for maintaining gene diversity.

New crops and replantings are initiated from seed set aside after harvest, stored seeds, cuttings from mature plants, or from plant tissue cultures maintained in storage within the closed system. An initial inventory of seed, plants and tissues is adequate for maintaining the genetic pool for long term biological diversity.

Tissue samples from diverse cultivars grown in the layer of soil, which may be original strains or a result of cross-breeding, are retained for subsequent propagation. This also provides an opportunity for the human occupants to select plants from the crops being grown, which demonstrate desirable characteristics for growth in the closed ecological system, and propagate those plants by growth from tissue culture or by selective cross-breeding. In this way, not only is gene diversity maintained, but also evolutionary drift may be enhanced by selecting plants particularly well suited to the environmental parameters of the intensive agriculture biome.

An important aspect of the closed ecological system is the maintenance of an atmosphere that is safe, pleasant and conducive to optimum health and growth of the plant, animal and microbial species in the closed system. As is well-known, carbon dioxide is employed in the photosynthesis occurring in the plant kingdom of the biomass, resulting in the enrichment of the oxygen content of the atmosphere. Oxygen is, of course, used during the animals' metabolism, with resultant production of carbon dioxide. It is important to maintain the carbon and oxygen cycles of the system in balance so that the concentration of these vital constituents of the atmosphere remain within acceptable ranges.

The carbon dioxide concentration in the atmosphere should be in the range of from about 150 to 10,000 ppm, and preferably in the range from about 300 to 500 ppm, which provides good plant growth and is not detrimental to animals. Maintenance of such a carbon dioxide level in the atmosphere in the closed system is of considerable importance for long term stability. The plants growing in the system provide appreciable buffering of the carbon dioxide concentration since increased $CO_2$ levels tend to increase fixing of carbon in the biomass, and vice versa. Uncontrolled buffering may not be sufficient to maintain a desired range over long terms.

The carbon dioxide concentration in the atmosphere may be controlled by varying the growth rate of plants in the system. A substantial portion of the total carbon in the system is in the form of living biomass. If the carbon dioxide concentration increases above optimum levels, plant growth may be stimulated so that additional carbon is bound into the growing plants. On the other hand, in the event the carbon dioxide concentration begins falling, growth of plants may be retarded to limit the fixing of carbon in the plant tissues.

The simplest way of controlling plant growth in the closed system is with control of water to some of the plants which tolerate substantial differences in water availability. By irrigating such plants, growth can be stimulated. By maintaining more arid conditions, growth can be retarded. Not all of the plants in the system are readily employed for this purpose. For example, the plants in the marshy biome have essentially unlimited water at all times. Similarly, rain forest plants cannot usually tolerate large variations of water availability over long periods. Crops intended for nutrition of humans or other animals in the system are preferably not employed for carbon control since they have a more important function and retarding growth could be detrimental to the animals.

Particularly well suited for control of the carbon cycle in the atmosphere of the closed system are the grasses grown in the savannah section of the wilderness biome. Grasses have wide tolerance for differing water contents in the soil and respond rapidly to addition of water. Further, carbon bound into this biomass may be returned to the atmosphere relatively rapidly since the fine structures of the grass are readily decomposed by microorganisms.

Another region useful for carbon control in the atmosphere is the desert biome. Most of the drought resistant desert biome can remain unwatered for long periods of time. It has a rich ephemeral spring flora which may take up a large amount of carbon dioxide during the early spring season. However, if the desert biome is not watered in the spring, that pulse of carbon dioxide removal does not occur, or its magnitude may be limited by limiting available water. This control is out of phase from the savannah grasses which have their greatest carbon absorption potential in the summer. Species of grasses may be selected for rapid growth in the cooler seasons as well.

The rain forest biome may also be employed for control of carbon dioxide concentration. Growth in this biome may be retarded by withholding water, leading to decreased fixing of carbon.

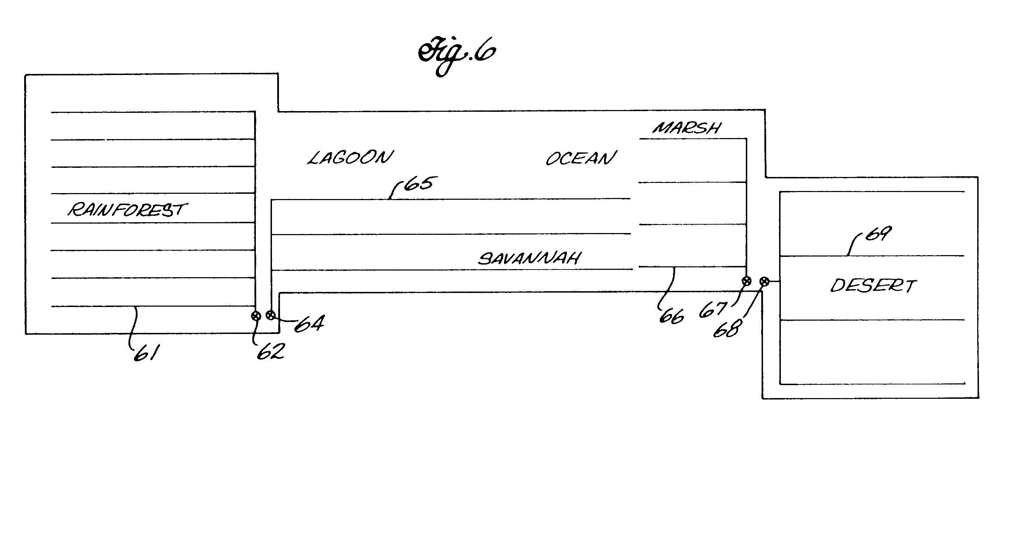

A water distribution system for selectively irrigating areas of the wilderness module is illustrated schematically in Fig. 6. The system comprises a network of conventional buried pipes, valves and water emitting devices for drip irrigation, spraying or flooding as desired. Since the different biomes in the system have different water requirements and control of water availability to various plants is useful for balancing the system, several separate watering systems are employed.

A plurality of pipes 61 extend through and over the rain forest for applying water as desired. Over head sprays may be used for simulating rain. Water may also be applied at soil level. A single valve 62 for this array of pipes is indicated. It will be apparent that a number of pipe systems and valves may be used in parallel for watering selected areas of the rain forest, or simply for assuring that the pressure drop and flow rate in the watering system are within acceptable ranges.

A similar watering system with pipes 63 and valves 64 is used for applying water to the grassy areas of the savannah biome. A separate system of pipes 66 and valves 67 is used for adding water as needed in the marsh area of the system. If desired, water pipes may be added for the lagoon, but normally this would receive adequate water by runoff from the rain forest biome. Finally, a separate network of pipes 68 and valves 69 are provided for watering the desert biome.

Another way of increasing carbon dioxide concentration in the atmosphere is by tilling the soil. Soils increase their production of $CO_2$ when disturbed or when additional carbon is added. Disturbing the soil tends to break up clay particles and increase exposed surface area. The tilled soil may be in either the wilderness biome or in the agricultural area. Microorganism growth in the soil is stimulated to expire additional carbon dioxide. Thus, by either cultivating areas of the soil and/or adding decomposable carbonaceous materials to it one can increase the carbon respiration from the soil.

For example, to rapidly increase carbon dioxide concentration, one can till harvested grass into the soil. One may also increase feed of grass to goats or the like to accelerate decomposition of the carbonaceous material in their manure.

It is particularly desirable to control growth rate of C4 plants. The C4 grasses are generally more tolerant of high temperature, high illumination conditions of the sort likely to be present in a closed system from time to time, than are C3 grasses. The C4 grasses are also more drought resistant and therefore better capable of withstanding low water availability during periods when it is desired to minimize fixing of carbon in the biomass. The C4 grasses also tend to grow faster than the C3 grasses and can fix carbon more quickly when that is desired.

Species of C4 grasses that are suitable include Pennisetum (buffle grass), Setaria, Leptochloa, Cynodon (Bermuda), Muhlenbergia, Aristida, and Panicum.

Summarizing, removal of carbon dioxide from the atmosphere may be enhanced by watering the savannah grasses or the desert biome. Carbon dioxide removal may be retarded by withholding water from these biomes or from the rain forest. Carbon dioxide may be increased in the atmosphere by tilling soil or decomposition of organic material such as cut grasses. By balancing these effects the carbon dioxide concentration may be maintained at acceptable levels.

It might be noted that the carbon dioxide control is provided over appreciable periods of time, hence monitoring to determine trends is desirable to anticipate changes and take action to counteract them. Cycles may extend over weeks instead of days since the carbon fixed in biomass has considerable inertia against rapid increases or decreases.

The carbon balance at start-up of the closed system may not be at steady state. This effect may be minimized by starting with crops and other plants in various stages of maturity and growth rate when the system is closed. Stored carbon in the form of decomposable cellulosic materials, such as wood chips or straw, may also be provided to make up for any carbon deficit.

The water cycle in the closed ecological system is also an important feature. Within the wilderness module there is a partial simulation of the hydrological cycle of the earth. There is condensation of atmospheric moisture, particularly in the rain forest area. There is stream runoff and subsurface seeping of moisture. Seasonal flooding of the Savannah region may be arranged as suggested above. Fresh water marshes with their complex ecological systems, tidal fluctuations of an estuary with a salinity gradient and eventual return of water to a small scale salt water ocean from which evaporation into the atmosphere occurs, all form parts of the complex hydrological cycle in the wilderness module.

Some water is also exchanged between the wilderness and agricultural modules. Some water, particularly potable water, may be stored for buffering equilibrium of the water cycle. Distillation and condensation by means of external energy sources may also be employed to enhance circulation of water through the closed system and maintain appropriate environmental conditions.

Water is applied to the crops in the intensive agriculture module as required to support optimum growth of the plants. The water may be applied by drip irrigation or at times may be applied by overhead spraying or flooding. Excess irrigation water may drain from the agricultural area and is then recycled to insure that all plant nutrients are effectively utilized. Water is also recovered from the fish aquaculture subsystem and from the animals and humans as urine and a portion of the solid wastes. Water is also discharged from such human activities as washing, clean up, cooking, and the like.

Water from these liquid sources is collected and treated as appropriate for the source of the liquid and the subsequent use intended, and recycled in the closed system. For example, human and animal wastes are sterilized for inhibiting proliferation of pathogenic organisms. If desired water may also be filtered, or treated with ultraviolet radiation, hydrogen peroxide or ozone for oxidizing organics or control of pH.

The nitrogen cycle is also an important feature of the enclosed ecological system. The animal and human wastes recycled to the layer of soil form an important part of the nitrogen cycle. Various kinds of microorganisms in the soil layer and in association with legumes convert nitrogen gas in the air into compounds that can be used by plants. Other microorganisms decompose plant matter, and in the process release nitrogen gas back in the air. Thus, losses of nitrogen from the soil are compensated by growing nitrogen-fixing crops with the other food crops. The nitrogen incorporated into these crops can be returned to the soil by a combination of plowing the crop material back into the soil, harvesting the crop material, composting it and reincorporating the compost into the soil, and feeding such nitrogen-rich crops to animals and returning the manure to the soil.

Phosphorus tends to become immobilized in soil. Microbial activity on rock phosphate and other sources of immobilized phosphorus results in slow release of phosphorus over time for maintaining soil fertility. Worms in the soil are also useful.

Some of the organisms in the closed system naturally give off toxic or noxious gases such as methane and carbon monoxide. Maintaining conditions for vigorous growth of microorganisms in the layer of soil in the soil bed reactor, also helps maintain a balanced system for assuring a pleasant and healthful environment with appropriate concentrations of nitrogen, carbon dioxide, oxygen and trace gases.

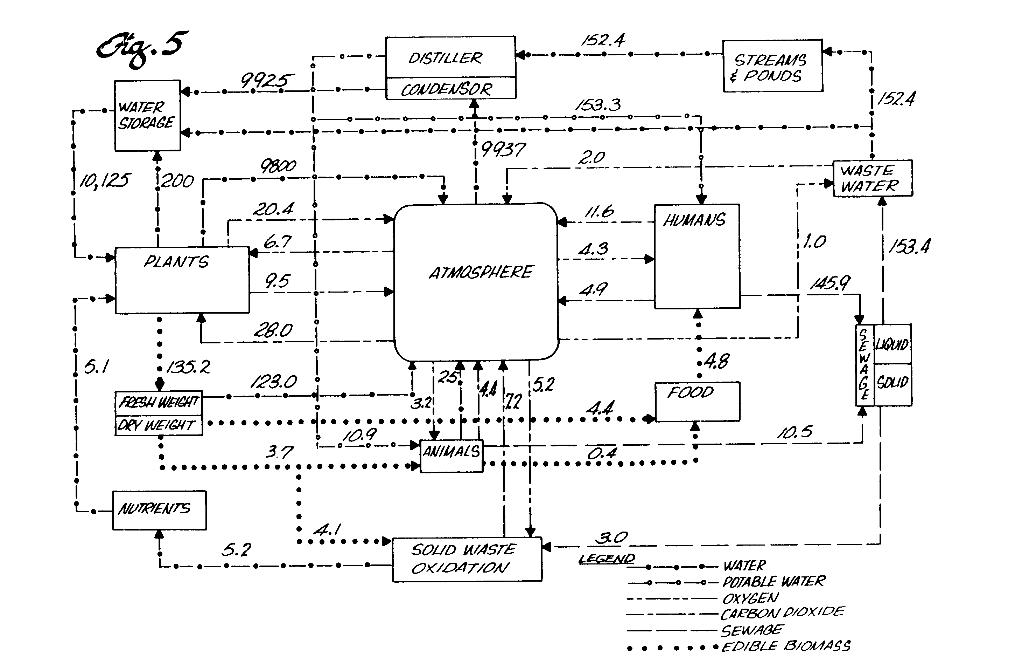

FIG. 5 illustrates in schematic block diagram form some of the closed cycles involved in the intensive agriculture portion of the closed ecological system with an indication of the approximate quantities of materials flowing between major components of the system. The values given on the drawing are in units of kilograms per day for a closed ecological system having eight human occupants. Thus, for example, to follow the carbon dioxide cycle, plants introduce about 9.5 kilograms of carbon dioxide into the atmosphere each day. At the same time waste water treatment and solid waste oxidation contribute about 2 kilograms and 7.2 kilograms, respectively, of carbon dioxide to the atmosphere daily. Human and animal respiration introduce 4.9 and 4.4 kilograms of carbon dioxide into the atmosphere daily. The contribution of these sources of carbon dioxide to the atmosphere are offset by use of about 28 kilograms per day of carbon dioxide by the plants for photosynthetic activity.

It should be recognized that the mass flows indicated in FIG. 5 are merely exemplary and may differ from time to time based in part on the number and types of animals and plants in the closed system. For example, it may be desirable to maintain a given carbon level in the soil by growing "lay-by" or green manure crops in rotation with the food crops in the agricultural area. These lay-by crops may have a high biomass and are either harvested and composted directly for reincorporation into the soil or may be plowed back directly as crop residue. Thus, the mass flow rates indicated are approximate averages. It will also be noted that slight imbalances may appear in the drawing due to rounding discrepancies. Further, inputs and outputs from the wilderness biome may also be included. Since there is a large biomass in the wilderness biome, control of water inputs to plants in this part of the system can have a pronounced effect on the total carbon cycle of the system.

Although a variety of features of the closed ecological system have been described in detail herein, it will be apparent that many modifications and variations are possible. The species of plants and animals selected for such a closed system are subject to considerable choice based on the environmental parameters to be encountered and the interactions of such species in a balanced ecological environment. The physical arrangement of the various features of such a closed ecological system are also subject to considerable variation from the specific embodiment described.

**Claims**

1. A closed ecological system comprising:
   an enclosure for retaining matter within the enclosure and excluding matter from entering the enclosure,
   an agricultural area in the enclosure for providing food for animal species within the enclosure,
   a wilderness area in the enclosure having a variety of ecological habitats and including a variety of plant species suitable to such habitats, and
   a watering means
   **characterized** in that said watering means are adapted for selectively watering different ecological habitats in the wilderness area in response to or in anticipation of changes in the carbon dioxide balance in the atmosphere within the enclosure.

2. The closed ecological system of claim 1 wherein the wilderness area comprises an area in which grass is grown, and comprising means for selectively applying water to the area where grass is grown.

3. The closed ecological system of claim 2 wherein the grass includes species of C4 grasses.

4. The closed ecological system of any of the preceding claims wherein the wilderness area comprises a forest biome in which growth of plants is inhibited when water is withheld.

5. The closed ecological system of any of the preceding claims wherein the wilderness area comprises a desert biome in which growth of plants is stimulated when water is applied during a season when grass has a low carbon absorption potential.

6. A method for balancing a closed ecological system isolated from the earth's environment and including both floral and faunal species, comprising the steps of:
   providing a layer of soil in the system,
   growing a diversity of plant species in the layer of soil,
   monitoring carbon dioxide concentration in the atmosphere within the closed system,
   **characterized** by controlling carbon dioxide concentration in the atmosphere within the closed system within the range of from 150 to 10000 ppm by shifting carbon dioxide between the atmosphere and a selected portion of the plant species, said shifting of carbon dioxide being controlled by selective application or withholding of water to the selected portion of the plant species.

7. The method of claim 6 wherein at least a portion of the plant species grown in the layer of soil are desert plants capable of withstanding drought, and wherein the controlling step comprises controlling water availability to the desert plants during a season when grass has a low carbon dioxide absorption potential.

8. The method of claim 6 or 7, wherein at least some of the plants are characteristics of those growing in a rain forest and the method comprises withholding at least some water from such rain forest plants.

9. The method of any of claims 6 to 8 wherein the controlling step includes introducing biomass into the soil for enhanced decomposition.

10. The method of any of claims 6 to 9 wherein the controlling step comprises tilling a portion of the soil.

**Patentansprüche**

1. Geschlossenes ökologisches System, umfassend:
   - eine Umschließung, die Materie innerhalb der Umschließung zurückhält und Materie daran hindert, in die Umschließung einzudringen,
   - einen Landwirtschaftsbereich in der Umschließung zum Bereitstellen von Nahrung für Tierarten innerhalb der Umschließung,

- einen Wildnisbereich in der Umschließung, der verschiedene ökologische Standorte aufweist und verschiedene für solche Standorte geeignete Pflanzenarten umfaßt, und
- Bewässerungsmittel,

**dadurch gekennzeichnet**, daß die Bewässerungsmittel dahingehend angepaßt sind, daß verschiedene ökologische Standorte in dem Wildnisbereich als Antwort auf oder in Erwartung von Änderungen hinsichtlich des Kohlendioxidgleichgewichts in der Atmosphäre innerhalb der Umschließung selektiv bewässert werden.

2. Geschlossenes ökologisches System nach Anspruch 1, worin der Wildnisbereich einen Bereich umfaßt, in welchem Gras wachsengelassen wird und umfassend Mittel zum selektiven Aufbringen von Wasser auf den Bereich, in dem Gras wachsengelassen wird.

3. Geschlossenes ökologisches System nach Anspruch 2, worin das Gras Arten von C4-Gräsern umfaßt.

4. Geschlossenes ökologisches System nach einem der vorstehenden Ansprüche, worin der Wildnisbereich ein Waldbiom umfaßt, in welchem das Pflanzenwachstum gehemmt wird, wenn nicht bewässert wird.

5. Geschlossenes ökologisches System nach einem der vorstehenden Ansprüche, worin der Wildnisbereich ein Wüstenbiom umfaßt, in welchem das Pflanzenwachstum stimuliert wird, wenn Wasser während einer Jahreszeit, in der Gras ein niedriges Kohlenstoffabsorptionspotential besitzt, aufgebracht wird.

6. Verfahren, welches ein geschlossenes ökologisches System, das von der Erdumgebung isoliert ist, und sowohl Pflanzen- als auch Tierarten umfaßt, im Gleichgewicht hält, umfassend die folgenden Schritte:
   - Bereitstellen einer Erdbodenschicht in dem System,
   - Wachsenlassen verschiedener Pflanzenarten in der Erdbodenschicht,
   - Aufzeichnen der Kohlendioxidkonzentration in der Atmosphäre innerhalb des geschlossenen Systems,

   **gekennzeichnet** durch Kontrollieren der Kohlendioxidkonzentration in der Atmosphäre innerhalb des geschlossenen Systems innerhalb des Bereichs von 150 bis 10.000 ppm durch Verschieben von Kohlendioxid zwischen der Atmosphäre und einem ausgewählten Teil der Pflanzenarten, wobei das Verschieben des Kohlendioxids kontrolliert wird durch selektives Aufbringen oder Fernhalten von Wasser zu dem ausgewählten Teil der Pflanzenarten.

7. Verfahren nach Anspruch 6, worin wenigstens ein Teil der in der Erdbodenschicht angebauten Pflanzenarten Wüstenpflanzen sind, die dazu fähig sind, Trockenheit zu widerstehen, und worin die Kontrollstufe das Kontrollieren der Wasserverfügbarkeit für die Wüstenpflanzen während einer Jahreszeit, in der Gras ein niedriges Kohlendioxidabsorptionspotential besitzt, umfaßt.

8. Verfahren nach Anspruch 6 oder 7, worin wenigstens einige Pflanzen die Merkmale von solchen Pflanzen aufweisen, die in einem Regenwald wachsen und das Verfahren das Fernhalten von wenigstens einigem Wasser von solchen Regenwaldpflanzen umfaßt.

9. Verfahren nach einem der Ansprüche 6 bis 8, worin die Kontrollstufe das Einbringen von Biomasse in den Erdboden zum Zweck einer verstärkten Verrottung umfaßt.

10. Verfahren nach einem der Ansprüche 6 bis 9, worin die Kontrollstufe das Pflügen eines Teils des Erdbodens umfaßt.

**Revendications**

1. Système écologique fermé, comprenant :
   une enceinte pour retenir de la matière dans l'enceinte et exclure l'entrée de matière dans l'enceinte,
   une aire agricole dans l'enceinte pour fournir des aliments à des espèces animales dans l'enceinte,
   une aire sauvage dans l'enceinte ayant divers habitats écologiques et incluant diverses espèces végétales appropriées à de tels habitats, et
   des moyens d'arrosage

**caractérisé en ce que** lesdits moyens d'arrosage sont adaptés pour arroser sélectivement différents habitats écologiques dans l'aire sauvage en réponse à, ou en anticipation, des changements de l'équilibre du dioxyde de carbone dans l'atmosphère de l'enceinte.

2. Système écologique fermé selon la revendication 1, dans lequel l'aire sauvage comprend une aire dans laquelle on fait pousser de l'herbe, et comprenant des moyens pour fournir sélectivement de l'eau à l'aire où on fait pousser de l'herbe.

3. Système écologique fermé selon la revendication 2, dans lequel l'herbe inclut les espèces d'herbes C4.

4. Système écologique fermé selon l'une quelconque des revendications précédentes, dans lequel l'aire sauvage comprend un biome forestier dans lequel la croissance des plantes est inhibée lorsque l'eau est retenue.

5. Système écologique selon l'une quelconque des revendications précédentes, dans lequel l'aire sauvage comprend un biome désertique dans lequel la croissance des plantes est stimulée lorsque de l'eau est fournie durant une saison où l'herbe a un faible potentiel d'absorption du carbone.

6. Procédé pour équilibrer un système écologique fermé isolé de l'environnement de la terre et incluant tant des espèces florales que des espèces fauniques, comprenant les étapes de :
   fourniture d'une couche de sol dans le système,
   croissance d'une diversité d'espèces végétales dans la couche de sol,
   contrôle de la concentration du dioxyde de carbone dans l'atmosphère du système fermé,
   **caractérisé** par le contrôle de la concentration du dioxyde de carbone dans l'atmosphère du système fermé dans la gamme de 150 à 10000 ppm en faisant passer du dioxyde de carbone entre l'atmosphère et une partie choisie des espèces végétales, ledit passage de dioxyde de carbone étant contrôlé par la fourniture ou la rétention sélective de l'eau à la portion choisie des espèces végétales.

7. Procédé selon la revendication 6, dans lequel au moins une partie des espèces végétales développées dans la couche de sol sont des plantes désertiques capables de résister à la sécheresse, et dans lequel l'étape de contrôle comprend le contrôle de la disponibilité en eau pour les plantes désertiques durant une saison où l'herbe a un faible potentiel d'absorption du dioxyde de carbone.

8. Procédé selon la revendication 6 ou 7, dans lequel au moins certaines des plantes sont caractéristiques de celles poussant dans une forêt tropicale humide et le procédé comprend la rétention d'au moins une partie de l'eau de telles plantes de forêt tropicale humide.

9. Procédé selon l'une quelconque des revendications 6 à 8, dans lequel l'étape de contrôle inclut l'introduction d'une biomasse dans le sol pour une décomposition accrue.

10. Procédé selon l'une quelconque des revendications 6 à 9, dans lequel l'étape de contrôle comprend la mise en culture d'une partie du sol.

Fig. 1

Fig.2

EP 0 386 578 B1

Fig. 3

Fig. 4

Fig. 5

EP 0 386 578 B1

Fig.6